# EUROPÄISCHE PATENTANMELDUNG

(11) **EP 1 783 069 A1**
(43) Veröffentlichungstag der Anmeldung: **09.05.2007**
(21) Anmeldenummer: 06020666.1
(22) Anmeldetag: 30.09.2006
(51) Int. Cl.: B65G 25/08, B65G 65/44, G01G 13/02, C12M 1/113

(54) **Befahrbarer Aufnahmebehälter**

(30) Priorität: 03.11.2005 DE 202005017357 U
(71) Anmelder: Huning Maschinenbau GmbH, 49324 Melle (DE)
(72) Erfinder: Heitling, Lutz, 49324 Melle (DE)
(74) Vertreter: Pott, Ulrich

(57) **Zusammenfassung**

Die Erfindung betrifft einen befahrbaren Aufnahmebehälter für z.B. Schüttgüter mit einer eine Bodenplatte (1) sowie einer Seitenwände umfassenden Behälterwandung (1.1), wobei die Behälterwandung (1.1) eine Austragöffnung mit einer dieser zugeordneten Austragvorrichtung (5) und der Bodenplatte (1) bewegliche Eintragelemente in z.B. Gestalt von pneumatisch oder hydraulisch antreibbaren Schubbodenförderern (3) zugeordnet sind, wobei die Behälterwandung (1.1) und die Bodenplatte (1) aus Beton bestehen und ingesamt auf Wägezellen (7) abgestützt sind, die mit einer Datenverarbeitungseinrichtung verbindbar sind.

## Beschreibung

Die Erfindung bezieht sich auf einen befahrbaren Aufnahmebehälter für z.B. Schüttgüter mit einer eine ebene Bodenplatte sowie einer Seitenwände umfassenden Behälterwandung, wobei die Behälterwandung eine Austragöffnung mit einer dieser zugeordneten Austragvorrichtung und der Bodenplatte bewegliche Eintragelemente in z.B. Gestalt von pneumatisch oder hydraulisch antreibbaren Schubbodenförderern zugeordnet sind.

Befahrbare Aufnahmebehälter der vorgenannten Art sind bekannt und werden beispielsweise für den Betrieb von Biogasanlagen eingesetzt. Diese sind vielfach als befahrbare Schubbodencontainersysteme ausgebildet mit einer Schubbodenannahmestation, Schubbodenförderern, die über Hydraulikzylinder vor- und rückstellbar sind, und mit Horizontal- und Vertikalförderschnecken zur Austragung der Biomasse. Damit lassen sich zuverlässig die unterschiedlichsten Feststoffe wie beispielsweise Maissilage, Putenmist, entwässerte Schlämme und dgl. über alternierend fördernde Schubböden zur Austragvorrichtung hin fördern und über die Austragvorrichtung bzw. die Horizontal- und Vertikalförderer der Biogasanlage zuführen.

In vielen Biogasanlagen besteht ein Bedarf, in einem stark schwankenden Umfang Feststoffe für den Betrieb der Anlage aufnehmen und zu bevorraten. Befahrbare Aufnahmebehälter der bekannten Bauart sind hinsichtlich ihrer Aufnahmekapazität begrenzt, so daß für die Befüllung des Aufnahmebehälters für einen kontinuierlichen störungsfreien Betrieb der Anlage ein erhöhter Personaleinsatz erforderlich ist, um auch während der Nachtzeit oder auch während eines Feiertagsbetriebs eine hinreichende Bevorratung der Feststoffe gewährleisten zu können. Einer größeren Dimensionierung von Aufnahmebehältern der bekannten Bauart sind Grenzen gesetzt. Zudem ist es erforderlich, den Füllungszustand des Aufnahmebehälters zu kontrollieren und jeweils individuell nachzufüllen. Ebenfalls ist es nicht möglich, bei den befahrbaren Aufnahmebehältern der herkömmlichen Bauart z.B. während eines erhöhten Anfalls von Ausgangsfeststoffen, beispielsweise nach Erntevorgängen, diesen in den Aufnahmebehältern direkt zu bevorraten. Vielmehr sind hier Zwischenlagersysteme einzubeziehen.

Es ist Aufgabe der vorliegenden Erfindung, einen befahrbaren Aufnahmebehälter der eingangs genannten Art derart weiterzubilden, daß dieser für die Aufnahme von größeren Feststoffmengen geeignet ist und dabei sicherstellt, daß die aufgenommene Feststoffmenge zu erfassen und anzuzeigen ist.

Zur Lösung dieser Aufgabe zeichnet sich der befahrbare Aufnahmebehälter der eingangs genannten Art dadurch aus, daß die Behälterwandung und die Bodenplatte aus Beton bestehen und insgesamt auf Wägezellen abgestützt sind, die mit einer Datenverarbeitungseinrichtung verbindbar sind.

Durch die Ausbildung der Behälterwandung und der Bodenplatte aus Beton können diese außerordentlich groß dimensioniert werden. Mit einer Behälterwandung aus Beton können groß dimensionierte Bodenplatten auch in ihren Endbereichen derart miteinander über die Behälterwandung verklammert werden, daß diese auch größten Lasten standhalten. Damit können enorme Mengen an Feststoffpartikel aufgenommen werden und darüber hinaus auch noch die Lasten von größeren LKW's aushalten, um den Aufnahmebehälter zu befüllen.

Die Behälterwandung und die Bodenplatte aus Beton sind darüber hinaus in vorteilhafter Weise ebenfalls geeignet, z.B. Schubbodenförderelemente und deren Antriebssysteme insgesamt abzustützen, beispielsweise in ersten und in zweiten Bereichen, die über die Seitenwände miteinander verklammert sind, ohne daß es besonderer Abstützmaßnahmen bedarf. Insgesamt sind dann die Behälterwandung und die Bodenplatte auf den Wägezellen abzustützen, die mithin eine Wiegeergebnis zeigen, was sämtliche Bauteile unter Einschluß des Schubbodens, der Antriebseinheiten, des Gewichtes der Behälterwandung und der Bodenplatte, der aufgenommenen Feststoffe und ggf. auch eines LKW's erfassen, und auf einer Datenverarbeitungseinrichtung darstellen kann. Damit können Feststoffe für den Betrieb einer Biogasanlage über sehr weitreichende Zeiträume bevorratet werden, auch beispielsweise für einen Betrieb an Feiertagen, ohne daß es eines Nachfüllvorganges bedarf. Die Kontrolle, wie weit gefüllt der Aufnahmebehälter noch ist, erfolgt über die Wägezellen und die Datenverarbeitungseinrichtung, wobei die Datenverarbeitungseinrichtung auch einen Nachfüllbedarf beispielsweise an eine zentrale Logistikstation weitergeben kann, um einen Nachbefüllungsvorgang auszulösen.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: zeigt ein Ausführungsbeispiel eines befahrbaren Aufnahmebehälters in einer schematisierten Draufsicht,
- Fig. 2: zeigt das Ausführungsbeispiel nach Fig. 1 in einer schematisierten Seitenansicht, und
- Fig. 3: vergrößert das in Fig. 2 mit X markierte Detail.

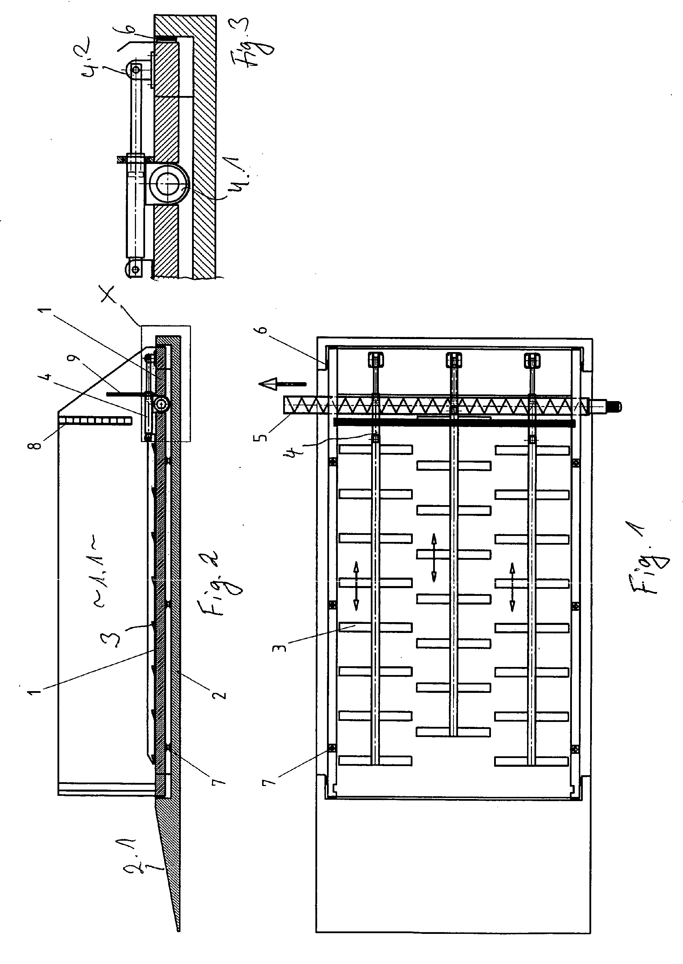

Der in den zeichnerischen Darstellungen nach den Fig. 1 bis 3 gezeigte fahrbare Aufnahmebehälter hat eine Bodenplatte 1 aus Beton mit aufstehender Seitenwandung 1.1, die insgesamt auf einer Fundamentplatte 2 aus Beton abgestützt ist. Über die Rampe 2.1 ist der Aufnahmebehälter von z.B. einem LKW zwecks Befüllung anzufahren. Der Bodenplatte 1 zugeordnet ist ein Schubboden 3, der insgesamt aus drei Strängen (wie aus Fig. 1 ersichtlich) besteht, die entsprechend den angedeuteten Pfeilen in Fig. 1 von Hydraulikzylindereinheiten 4 hin- und hergehend anzutreiben sind. Dazu haben die Schubböden Schubstangenelemente, die sägezahnförmig ausgebildet sind mit einer im wesentlichen senkrechten Förderseite und einer schräg nach oben zulaufenden Ablaufseite (wie aus Fig. 2 ersichtlich).

Im Bereich der Zylinder 4 ist als Austragvorrichtung eine Austragschnecke 5 vorgesehen, so daß die eingefüllten Feststoffe nach ihrer Förderung durch den Schubboden der Austragschnecke 5 zugeführt werden und von dieser dann zur Befüllung von z.B. einer Biogasanlage weiter transportiert werden können.

Insgesamt ist der Container mitsamt dem Schubboden 3, den Hydraulikzylindern 4, der Betonbodenplatte 1, den Betonseitenwänden 1.1 über Wägezellen 7 an dem Betonfundament 2 abgestützt und an den Stirnkanten über Anschlagplatten 6 sowohl in Längsrichtung der Betonbodenplatte 1 als auch in Querrichtung der Betonbodenplatte abgestützt. In Förderrichtung der Feststoffpartikel der Austragschnecke 5 vorgeordnet ist zudem noch eine Dosierwand 8, die höhenverstellbar ausgebildet ist. Hinter der Schnecke 5 befindet sich noch eine Schneckenwand 9, die Material daran hindert, über die Schnecke 5 hinaus in Längsrichtung der Betonbodenplatte 1 transportiert zu werden.

Wie näher aus dem Detail X nach Fig. 3 hervorgeht, sind die Hydraulikzylinder 4 an der Betonbodenplatte 1 befestigt und zwar zunächst mit ihrer Basis 4.1 und darüber hinaus mit dem Endanschlag 4.2, indem die Basis 4.1 in einen Ausschnitt der Betonplatte 1 eingelassen ist. Auch aus dieser Darstellung sind die Anschlagplatten 6 ersichtlich.

## Patentansprüche

1. Befahrbarer Aufnahmebehälter für z.B. Schüttgüter mit einer eine Bodenplatte (1) sowie einer Seitenwände umfassenden Behälterwandung (1.1), wobei die Behälterwandung (1.1) eine Austragöffnung mit einer dieser zugeordneten Austragvorrichtung (5) und der Bodenplatte (1) bewegliche Eintragelemente in z.B. Gestalt von pneumatisch oder hydraulisch antreibbaren Schubbodenförderern (3) zugeordnet sind, **dadurch gekennzeichnet, daß** die Behälterwandung (1.1) und die Bodenplatte (1) aus Beton bestehen und ingesamt auf Wägezellen (7) abgestützt sind, die mit einer Datenverarbeitungseinrichtung verbindbar sind.

2. Aufnahmebehälter nach Anspruch 1, **dadurch gekennzeichnet, daß** die Wägezellen (7) unterhalb der Bodenplatte (1) des Aufnahmebehälters im Bereich von Seitenwänden des Behälters angeordnet sind.

3. Aufnahmebehälter nach Anspruch 1 oder 2, **dadurch gekennzeichnet, daß** über die Wägezellen (7) der Aufnahmebehälter mitsamt seinem Inhalt unter Einschluß der Austragvorrichtung (5) von Eintragelementen und deren Antriebselementen (4) wiegbar sind.

4. Aufnahmebehälter nach einem der Ansprüche 1 bis 3, **dadurch gekennzeichnet, daß** der Aufnahmebehälter auf einer aus Beton gefertigten Fundamentplatte (2) abgesetzt ist und zwischen dem Aufnahmebehälter und der Fundamentplatte (2) Anschlagplatten (6) sowohl an den Stirnseiten als auch an den Längsseiten des Aufnahmebehälters vorgesehen sind.

5. Aufnahmebehälter nach einem der Ansprüche 1 bis 4, **dadurch gekennzeichnet, daß** zumindest eine Behälterwand als höhenverstellbare Dosierwand (8) ausgebildet und diese der Austragsvorrichtung (5) zugeordnet ist.

6. Aufnahmebehälter nach einem der Ansprüche 1 bis 5, **dadurch gekennzeichnet, daß** die Bodenplatte (1) in einen ersten Teil zur Aufnahme des Eintragsystems und in einen zweiten Teil zur Aufnahme der Austragsvorrichtung (5) sowie der Antriebsmittel (4) für das Eintragsystem ausgebildet ist.

7. Aufnahmebehälter nach Anspruch 6, **dadurch gekennzeichnet, daß** der erste Teil und der zweite Teil der Bodenplatte über Seitenwände miteinander verklammert sind.

8. Aufnahmebehälter nach einem der Ansprüche 1 bis 7, **dadurch gekennzeichnet, daß** in die Bodenplatte (1) eine Basis (4.1) für Antriebszylinder (4) des Eintragsystems eingelassen sind.

9. Aufnahmebehälter nach Anspruch 8, **dadurch gekennzeichnet, daß** sich eine Schubstange eines Antriebzylinders (4) an einem Endbereich der Bodenplatte (1) abstützt.

10. Aufnahmebehälter nach einem der Ansprüche 1 bis 9, **dadurch gekennzeichnet, daß** der Austragsvorrichtung (5) in Gestalt einer Dosierschnecke eine Dosierwand (9) zugeordnet ist.
